# EUROPÄISCHE PATENTSCHRIFT

(11) **EP 2 226 500 B1**
(45) Veröffentlichungstag und Bekanntmachung des Hinweises auf die Patenterteilung: **30.08.2017**
(21) Anmeldenummer: 10002090.8
(22) Anmeldetag: 02.03.2010
(51) Int. Cl.: H02J 3/38, F03D 9/00, H02J 3/18, F03D 7/04

(54) **Windparkregler**
Wind farm regulator
Régulateur de parc éolien

(30) Priorität: 02.03.2009 DE 102009011053
(43) Veröffentlichungstag der Anmeldung: 08.09.2010
(73) Patentinhaber: BTC Business Technology Consulting AG, 26121 Oldenburg (DE)
(72) Erfinder: Wittek, Thomas, 26386 Wilhelmshaven (DE); Guo, Xin Dr., 13591 Berlin (DE)
(74) Vertreter: Lenzing Gerber Stute

(56) Entgegenhaltungen:
- EP-A2- 1 643 609
- WO-A1-2008/025162
- WO-A2-2006/120033
- JP-A- H03 168 815

## Beschreibung

Die vorliegende Erfindung betrifft einen Regler für einen Windpark mit mehreren Windenergieanlagen mit den Merkmalen des Oberbegriffs des Anspruchs 1.

Windparks sind Gruppen von Windenergieanlagen, die die erzeugte elektrische Energie gemeinsam an einen Netzanschlusspunkt abgeben. Bezüglich des elektrischen Netzes sind Netzanschlussregeln festgelegt, die bestimmen, wie sich der Windpark am Versorgungsnetz verhalten muss. Zu diesen Netzanschlussregeln gehören insbesondere das Verhalten beim Einschalten des Windparks, die Bereitstellung von Blindleistung, die Wirkleistungsabgabe sowie das Verhalten bei Störungen.

Die Aufgaben der Windparkregelung bestehen darin, die Einhaltung der Netzanschlussregeln am Netzanschlusspunkt zu gewährleisten sowie die Vorgaben für die zu erzeugende Wirkleistung und die bereitzustellende Blindleistung umzusetzen. Dabei soll durch eine Leistungsfaktorregelung eine Optimierung des Energieertrags erfolgen.

In der Praxis werden bei Windparks die vielfältigen Regelaufgaben aufgeteilt. Ein Oberregler gibt den einzelnen Windenergieanlagen die Sollwerte für die Wirkleistung und die Blindleistung vor. Jede Windenergieanlage besitzt einen individuellen Unterregler, der elektrisch und mechanisch die Windenergieanlage so einregelt, dass diese Vorgaben eingehalten werden.

Aus der Druckschrift DE 10 2007 036 444 A1 ist es bekannt, in einem Windpark die angeforderte Leistung auf Windenergieanlagen mit individuell unterschiedlichen Maximalleistungen zu verteilen. Eine übergeordnete Steuerung berechnet und /oder empfängt einen aktuell maximal zulässigen Wert für diese elektrische Größe. Eine Lastflussrechnung findet nicht statt. Vielmehr wird die maximale Gesamtleistung als einfache Summe der Einzelleistungen ermittelt. Das Verfahren aus diesem Dokument ist nicht für eine Blindleistungsregelung vorgesehen und auch nicht dafür geeignet.

Aus der Druckschrift WO 2006/037576 A1 ist ein Windpark mit einer Blindleistungsregelung bekannt, bei dem die Blindleistungsregelung als verteilter Regler ausgeführt ist. Ein Oberregler ist zur Einstellung eines globalen Leistungskoeffizienten der in das Energieübertragungsnetz abgegebenen Leistung so eingerichtet, dass ein Blindleistungssollwert für jede Windkraftanlage ermittelt und als Signal abgegeben wird. Jede einzelne Windenergieanlage verfügt über einen Unterregler, der durch eine Regelung den vorgegebenen Blindleistungssollwert an der Einspeisung am Turmfuß der Windkraftanlage einhält.

Die Blindleistungsregelung von Windparks durch Modellberechnungen ist überdies Gegenstand der Druckschriften EP1643609, WO2006120033, WO2008025162 und JPH03168815.

Es ist die Aufgabe des Windparkreglers, Vorgaben in geeigneter Form für die einzelnen Unterregler der Windkraftanlagen zu ermitteln, um einerseits die Einhaltung der Netzanschlussregeln zu gewährleisten und auf der anderen Seite den maximalen Ertrag des Windparks zu ermöglichen.

Diese Aufgabe wird durch einen Regler mit den Merkmalen des Anspruchs 1 gelöst.

Weil bei einem Verfahren zur Regelung der Blindleistung eines wenigstens zwei Windenergieanlagen (i) umfassenden Windparks folgende Schritte vorgesehen sind:
a) Vorgabe eines die Blindleistung des Windparks kennzeichnenden Sollwertes (w)
b) Abfrage von aktuellen Werten der individuellen Blindleistung (q(i)) und der individuellen Wirkleistung (p(i)) der einzelnen Windenergieanlagen,
c) Berechnen der zu erwartenden Blindleistung (Qnap) und Wirkleistung (Pnap) am Netzanschlusspunkt mittels einer Lastflussberechnung aus den Werten p(i) und q(i),
d) Berechnen der Abweichung der zu erwartenden Blindleistung (Qnap) von dem Sollwert (w) und
   d1) wenn die Abweichung größer als ein Grenzwert (x) ist, Berechnen eines Stellwertes (u), der zur Verringerung der Abweichung ausgegeben werden soll, und weiter zum Schritt e), oder
   d2) wenn die Abweichung kleiner oder gleich dem Grenzwert (x) ist, Ausgabe des Stellwertes (u) an den Windpark und zurück zum Schritt a).
e) Berechnen der Blindleistung q(i) und der Wirkleistung p(i), die sich aufgrund des Stellwertes (u) an den Windenergieanlagen ergeben würden, und Weiterverarbeiten dieser berechneten Werte q(i) und p(i) im Schritt c),
wird das Ziel erreicht, die Netzanschlussregeln am Netzanschlusspunkt einzuhalten und auch den Wirkungsgrad des gesamten Windparks zu optimieren.

Wenn weiter im Schritt d2) nach der Ausgabe des Stellwertes (u) an den Windpark die tatsächlich erzeugte Blindleistung (Qnap) am Netzanschlusspunkt mit einer aus dem Sollwert (w) ermittelten geforderten Blindleistung (Qsoll) verglichen wird und die Abweichung als Störgröße (d) auf einen Nachregler (8) gegeben wird, ist eine sehr präzise Regelung mit geringem Nachregelbedarf möglich.

Wenn zwischen den Windenergieanlagen und der übergeordneten Steuerung wenigstens ein Transformator vorgesehen ist, ist es mit dem erfindungsgemäßen Verfahren dennoch möglich, die Blindleistung in Echtzeit zu regeln, wobei eine Regelfrequenz im Bereich von 1 Hz oder weniger ausreichend ist.

Nachfolgend wird ein Ausführungsbeispiel der vorliegenden Erfindung anhand der Zeichnung näher beschrieben. Es zeigen:
- Fig. 1:: den erfindungsgemäßen Windparkregler in einem Blockschaltbild;
- Fig. 2:: den Ablauf einer Lastflussberechnung aus dem Regler nach Fig. 1 als Ablaufdiagramm;
- Fig. 3:: eine typische Kennlinie eines Windparktransformators; sowie
- Fig. 4:: einen Windpark, der über einen Transformator an das Hochspannungsnetz angeschlossen ist.

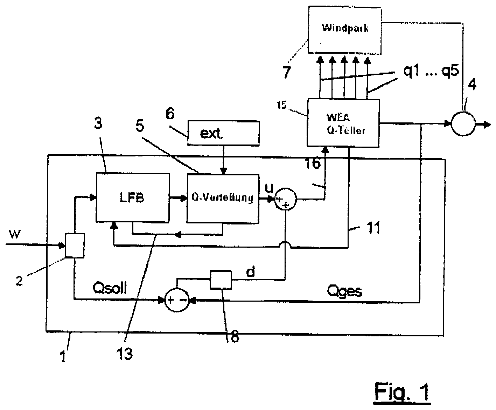

In der Fig. 1 ist der Regler für einen Windpark mit den Ein- und Ausgangsgrößen als Blockdiagramm veranschaulicht. Der Regler erhält an seiner Eingangsseite, in der Fig. 1 links, die aus dem Netzbetrieb vorgegebene Führungsgröße w. Diese Führungsgröße w ist im Allgemeinen der Leistungsfaktor cos ϕ, der an einem Netzanschlusspunkt erzielt werden soll. Der gesamte Regler ist innerhalb der Box 1 skizziert. Aus der Führungsgröße w wird zunächst in einer Eingangsstufe 2 der Sollwert Q_{SOLL} der Blindleistung des angeschlossenen Windparks ermittelt. Dieser wird später mit der tatsächlich erzeugten gesamten Blindleistung Q_{CES} verglichen.

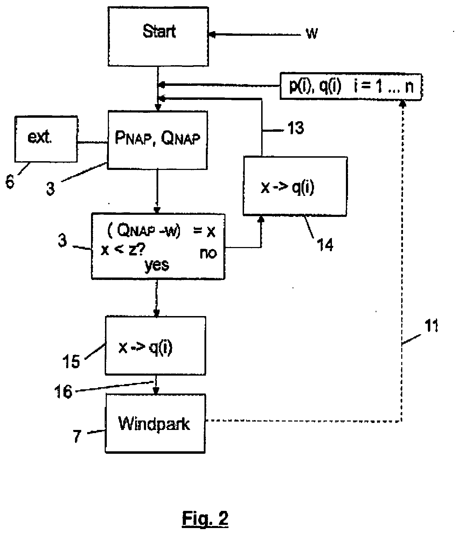

Die Führungsgröße w wird auf eine Lastflussberechnung 3 gegeben. Die Lastflussberechnung 3 ermittelt iterativ die erforderliche Blindleistung, die an einem Netzanschlusspunkt 4 vorliegen muss, um die Führungsgröße w und den Sollwert der Blindleistung Q_{SOLL} auszuregeln. Die Lastflussberechnung 3 wird unten anhand der Fig. 2 näher beschrieben.

Das Ergebnis der Lastflussberechnung 3 ist eine berechnete Blindleistung und wird als Eingangsgröße an eine Blindleistungsverteilung 5 übergeben. Die Blindleistungsverteilung 5 erhält als weitere Eingangsgrößen außerdem Informationen über externe Faktoren 6. Anhand dieser Eingangssignale ermittelt die Blindleistungsverteilung 5 rechnerisch, welche individuellen Blindleistungen q1 ... qn die Windkraftanlagen 1 bis n eines Windparks 7 zur Verfügung stellen müssen, um am Netzanschlusspunkt 4 die gewünschte Gesamtblindleistung Q_{CES} verfügbar zu machen. In der Figur 1 wird von fünf Windkraftanlagen ausgegangen, es gilt also n = 5.

Die Vorgaben für die Blindleistungen q1 ... qn werden dann als Stellwert u an den Windpark 7 abgegeben. Zur weiteren Regelung wird innerhalb des Reglers 1 die am Netzanschlusspunkt 4 anstehende Gesamtblindleistung Qges gemessen und die Differenz zu dem Sollwert Qsoll aus der Eingangsstufe 2 gebildet. Diese Differenz wird auf einen Nachregler 8 gegeben, der eine Störgröße d ausgibt. Die Störgröße d wird schließlich zu dem Stellwert u addiert und die Summe über die Steuerleitung 16 als Regelgröße an den Windenergieanlagen - Q-Verteiler weitergeleitet.

Dabei ist angestrebt, durch die Lastflussberechnung 3 diese Vorgabe bereits so genau zu ermitteln, dass die erforderliche Nachregelung über die Störgröße d minimal ist. Der Windparkregler 1 ist als Oberregler ausgeführt. Er gibt nur Sollwerte für die Blindleistungsanforderung q1 ... qn an die Windkraftanlagen 1 - n ab. Die interne mechanische und elektrische Regelung der individuellen Windkraftanlage erfolgt durch den dort vorgesehenen Unterregler, ohne dass der Oberregler hier weitere Regelungsaufgaben zu übernehmen hat.

Die Fig. 2 zeigt den Ablauf der Lastflussberechnung 3 in einem Ablaufdiagramm. Die Lastflussberechnung 3 erhält zum Einen die Blindleistungsvorgabe w und zum Anderen die aktuellen Messwerte p(i) und q(i) für die Wirk- und Blindleistung jeder einzelnen Windkraftanlage i = 1 ... n. Aus diesen Werten wird mathematisch der sich ergebende Wert für die Gesamt-Wirkleistung Pnap und Gesamt-Blindleistung Q_{NAP} am Netzanschlusspunkt 4 berechnet.

Im nächsten Schritt wird der errechnete Wert Qnap für die gesamte Blindleistung am Netzanschlusspunkt 4 mit dem Blindleistungssollwert w verglichen und eine Differenz x ermittelt.

Ist die Differenz x größer als ein Schwellwert z, so gilt der Blindleistungssollwert mit den vorgegebenen p(i) und q(i) als nicht erreicht. Dies ist der nachfolgende Fall 1.

Ist die Differenz x kleiner als z, so gilt der Blindleistungssollwert mit den vorgegebenen p(i) und q(i) als erreicht. Dies ist der nachfolgende Fall 2.

### Fall 1

Im Fall 1 wird die ermittelte Differenz x zwischen w und Q_{NAP} im nächsten Schritt 14 rechnerisch verteilt auf die verschiedenen Windkraftanlagen 1 ... n als eine rein rechnerische Vorgabe, die dann über die Leitung 13 an stelle der real gemessenen Blindleitungswerte q1 ... qn in die Berechnung der Gesamt-Wirkleistung Pnap und Gesamt-Blindleistung Qnap gegeben wird. Die Lastflussberechnung wird dann mit den berechneten Blindleistungen erneut durchgeführt, um zu ermitteln, ob die im Schritt 14 berechnete Änderung zu dem gewünschten Qnap führt, also die Differenz x zwischen w und Qnap kleiner als z wird.

Dieses iterative Verfahren wird so lange durchgeführt, bis sich der aus der Lastflussberechnung ergebende, theoretisch zu erwartende Blindleistungswert Q_{NAP} dem Sollwert w genügend angenähert hat. Erst dann ist der Fall 2 erreicht.

### Fall 2

Im Fall 2 werden die während der Iteration berechneten Vorgaben q1 ... qn an die Windkraftanlagen 1 ... n abgegeben. Der zuvor errechnete Wert Qnap wird sich dann als Gesamtblindleistung Qges bis auf geringfügige Abweichungen innerhalb der zulässigen Toleranz z am Netzanschlusspunkt 4 einstellen.

Die Nachregelung der gegebenenfalls entstehenden Abweichung x erfolgt in der Fig. 1 durch den Nachregler 8. Eine solche Nachregelung wird erforderlich sein, weil die physikalischen Gegebenheiten innerhalb der Windkraftanlage und in dem elektrischen Pfad zwischen jeder Windkraftanlage und dem Netzanschlusspunkt nicht mit absoluter Genauigkeit vorherzusagen sind. Diese Gegebenheiten sind in der Fig. 1 als externe Faktoren 6 bereits berücksichtigt. Eine neue Vorgabe w führt dann zu einem neuen Start des Regelungsvorgangs.

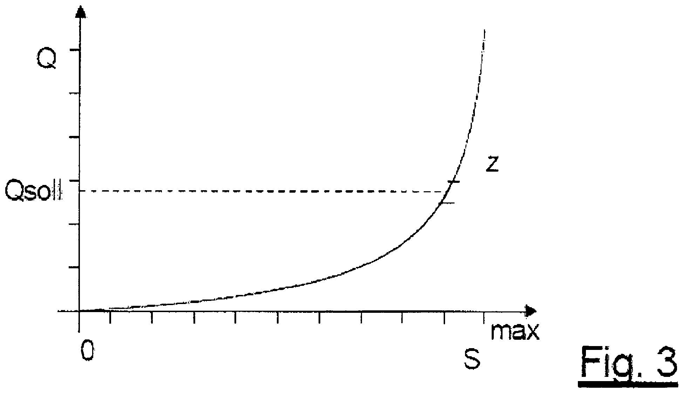

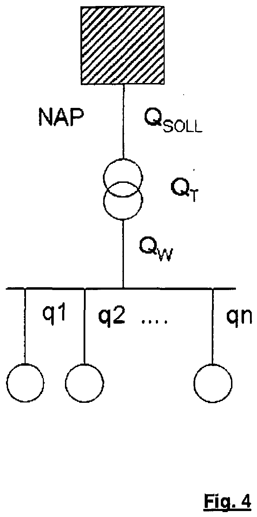

In der Fig. 3 ist die Blindleistung Q_{T} des Transformators über seine normierte Scheinleistung S_{T} dargestellt. Der Zusammenhang zwischen der Scheinleistung S_{T} und der Blindleistung Q_{T} ist bekannt, aber nicht linear. Diese Kennlinie ist für jeden Windpark ein individuelles Merkmal und beeinflusst die Blindleistungsregelung eines Windparks wesentlich. Gemäß Fig. 4 gilt Q_{W} = Qₛₒₗₗ - Q_{T} (Q_{T} ist abhängig von S_{T}), wobei Q_{W} die erforderliche Blindleistung an den Windkraftanlagen (Q_{W} = q1 + q2 + ... qn)darstellt) ist. Ziel des beschriebenen Regelungsverfahrens ist es, die erforderliche Blindleistung an der Windkraftanlage im Voraus so genau zu berechnen und vorzugehen, dass der Einfluss durch die Blindleistung des Transformators Q_{T} eliminiert wird. Ein Nachregelungsbedarf ergibt sich praktisch nur in einem sehr kleinen, als linear zu betrachtenden Bereich.

Das erfindungsgemäße Verfahren, bei dem eine Lastflussberechnung die erforderliche Blindleistung q(i) für jede einzelne Windkraftanlage i iterativ berechnet und die sich ergebende Gesamtblindleistung Qnap mit dem Vorgabewert w abgleicht, bevor der Stellwert an die einzelnen Windkraftanlagen abgegeben wird, minimiert den Regelungsbedarf innerhalb der einzelnen Windkraftanlagen, also innerhalb jedes einzelnen Unterreglers.

Dadurch wird das Ziel erreicht, die Netzanschlussregeln am Netzanschlusspunkt einzuhalten und auch den Wirkungsgrad des gesamten Windparks zu optimieren.

## Patentansprüche

1. Verfahren zur Regelung der Blindleistung eines wenigstens zwei Windenergieanlagen (i) umfassenden Windparks mit folgenden Schritten:
a) Vorgabe eines die Blindleistung des Windparks kennzeichnenden Sollwertes (w)
b) Abfrage von aktuellen Werten der individuellen Blindleistung q(i) und der individuellen Wirkleistung p(i) der einzelnen Windenergieanlagen,
c) Berechnen der zu erwartenden Blindleistung (Qnap) und Wirkleistung (Pnap) am Netzanschlusspunkt mittels einer Lastflussberechnung aus den Werten p(i) und q(i),
d) Berechnen der Abweichung der zu erwartenden Blindleistung (Qnap) von dem Sollwert (w) und
d1) wenn die Abweichung (x) größer als ein Grenzwert (z) ist, Berechnen eines Stellwertes aus den Vorgaben für die Blindleistungen q(i), der zur Verringerung der Abweichung ausgegeben werden soll, und weiter zum Schritt e), oder
d2) wenn die Abweichung (x) kleiner oder gleich dem Grenzwert (z) ist, Ausgabe eines aus den Vorgaben für die Blindleistungen q(i) berechneten Stellwertes (u) an den Windpark und zurück zum Schritt a).
e) Berechnen der Blindleistung q(i) und der Wirkleistung p(i), die sich aufgrund des Stellwertes (u) an den Windenergieanlagen ergeben würden, und Weiterverarbeiten dieser berechneten Werte q(i) und p(i) im Schritt c).

2. Verfahren nach Anspruch 1, **dadurch gekennzeichnet, dass** im Schritt d2) nach der Ausgabe des Stellwertes (u) an den Windpark die tatsächlich erzeugte Blindleistung (Qnap) am Netzanschlusspunkt mit einer aus dem Sollwert (w) ermittelten geforderten Blindleistung (Qsoll) verglichen wird und die Abweichung als Störgröße (d) auf einen Nachregler (8) gegeben wird.

3. Verfahren nach Anspruch 1 oder 2, **dadurch gekennzeichnet, dass** der Schritt c) in einer übergeordneten Steuerung erfolgt, wobei zwischen den Windenergieanlagen und der übergeordneten Steuerung wenigstens ein Transformator vorgesehen ist.

## Claims

1. Method for controlling the reactive power of a wind park comprising at least two wind energy installations (1) having the following steps:
a) Specification of a target value (w) characterising the reactive power of the wind park
b) Query of current values of the individual reactive power q(i) and of the individual active power p(i) of the individual wind energy installations,
c) Calculation of the reactive power (Qnap) to be expected and active power (Pnap) at the network connection point by means of a load flow calculation based on the values p(i) and q(i),
d) Calculation of the deviation of the reactive power (Qnap) to be expected from the target value (w) and
d1) if the deviation (x) is greater than a threshold value (z), calculation of a set value based on the specifications for the reactive powers q(i) which should be outputted for the reduction of the deviation, and then continue to step e), or
d2) if the deviation (x) is smaller than or equal to the threshold value (z), output of a set value (u) calculated based on the specifications for the reactive powers q(i) to the wind park and back to step a).
e) Calculation of the reactive power q(i) and the active power p(i) which would result on the basis of the set value (u) at the wind power installations, and further processing of said calculated values q(i) and p(i) in step c).

2. Method according to Claim 1, **characterised in that** in step d2) after the output of the set value (u) to the wind park the actually generated reactive power (Qnap) is compared at the network connection point with a required reactive power (Qtarget) determined from the target value (w) and the deviation is given as disturbance variable (d) on a post-regulator (8).

3. Method according to Claim 1 or 2, **characterised in that** step c) is carried out in a higher-level controller, wherein at least one transformer is provided between the wind energy installations and the high-level controller.

## Revendications

1. Procédé de régulation de la puissance réactive d'un parc éolien comportant au moins deux installations d'énergie éolienne (i) avec les étapes suivantes :
a) indication d'une valeur de consigne (w) caractéristique de la puissance réactive du parc éolien,
b) consultation des valeurs actuelles de la puissance réactive individuelle q(i) et de la puissance active individuelle p(i) de chaque installation d'énergie éolienne,
c) calcul de la puissance réactive attendue (Qnap) et de la puissance active (Pnap) au point de raccordement au réseau à l'aide d'un calcul du flux de charge à partir des valeurs p(i) et q(i),
d) calcul de l'écart entre la puissance réactive attendue (Qnap) et la valeur de consigne (w) et
d1) lorsque l'écart (x) est supérieur à une valeur limite (z), calcul d'une valeur de réglage à partir des spécifications des puissances réactives q(i), laquelle doit être émise pour la réduction de l'écart, et passer à l'étape e), ou
d2) lorsque l'écart (x) est inférieur ou égal à la valeur limite (z), émission d'une valeur de réglage (u), calculée à partir des spécifications des puissances réactives q(i), au niveau du parc éolien et retour à l'étape a).
e) calcul de la puissance réactive q(i) et de la puissance active p(i) qui résulteraient, en fonction de la valeur de réglage (u), aux installations d'énergie éolienne, et traitement ultérieur de ces valeurs calculées q(i) et p(i) dans l'étape c).

2. Procédé selon la revendication 1, **caractérisé en ce que** dans l'étape d2), après l'émission de la valeur de réglage (u) au niveau du parc éolien, la puissance réactive (Qnap) effectivement produite au point de raccordement au réseau est comparée à une puissance réactive (Qsoll) requise déterminée à partir de la valeur de consigne (w) et l'écart est transmis sous forme de grandeur perturbatrice (d) à un post-régulateur (8).

3. Procédé selon la revendication 1 ou 2, **caractérisé en ce que** l'étape c) a lieu dans une commande en amont, où au moins un transformateur est prévu entre les installations d'énergie éolienne et la commande en amont.
